## Europäisches Patentamt

## European Patent Office

## Office européen des brevets

(11) Publication number: **0 271 608**
**B1**

## EUROPEAN PATENT SPECIFICATION

(45) Date of publication of the patent specification:
21.03.90

(51) Int. Cl.⁴: **B07B 9/00, B07B 4/08**

(21) Application number: **86202333.0**

(22) Date of filing: **18.12.86**

(54) Device for separating lighter objects from waste material.

(43) Date of publication of application:
**22.06.88 Bulletin 88/25**

(45) Publication of the grant of the patent:
**21.03.90 Bulletin 90/12**

(84) Designated Contracting States:
**AT BE CH DE ES FR GB GR IT LI LU NL SE**

(56) References cited:
**DE-A- 3 248 493**
**DE-B- 2 629 746**
**FR-A- 2 496 495**
**NL-A- 8 502 559**
**US-A- 1 327 452**
**US-A- 3 888 351**

(73) Proprietor: **Smulders Gerwen B.V., P.O. Box 114, NL-5670 AC Nuenen(NL)**

(72) Inventor: **Ceelen, Lambertus Petrus, Klarinetstraat 65, NL-5702 ST Helmond(NL)**

(74) Representative: **Noz, Franciscus Xaverius, Ir. et al, Boschdijk 155 P.O. Box 645, NL-5600 AP Eindhoven(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The invention relates to a device for separating lighter objects from waste material provided with a vibrating sieve by means of which the waste material can be displaced into the longitudinal direction of the sieve whereby near one end of the sieve a supply mechanism for the supply of the material is arranged and a suction device is provided above the vibrating sieve.

The rubble, coming from demolished buildings or the like, is usually crushed in a brick crusher in order to be re-used, e.g. for road way paving and the like. Such rubble often contains impurities, such as pieces of wood and the like. However, it is undesired that wood and the like remain behind in the crushed and usually sieved rubble, because such impurities reduce the quality of the crushed stone thus obtained and make it less suitable for use in road way pavings and the like.

It has been tried before to remove waste wood and the like by subjecting the rubble to be purifified to washing. However, this requires complex machinery and the consumption of a great deal of water, whereby the processing of the polluted water also involves a great deal of difficulty.

It has also been suggested to move the rubble along a conveyor belt and remove the waste wood and the like by hand, but this is labour intensive and unpleasant work.

Also the separation of e.g. upholstery materials and the like from scrap metal obtained from scrapping car wrecks, where similar problems occur, might be considered.

From DE-B 2 629 746 is known a device of the above mentioned kind for separating crushed glass from small particles wherein the particles are passed through a cyclone for removing said particles from the air flow generated by the fan. Such a structure is not apt for removing relatively large objects from rubble or the like.

A similar device is known from FR-A 2 496 495.

Further from US-A 3 888 351 is known a device, whereby a suction device having an endless perforated conveyor belt is arranged immediately beside the supply mechanism above the vibrating sieve. In practice it has become apparent thar, when such an arrangement of the suction device is used, a grat deal of the lighter materials, which need to be sucked, remains behind inthe waste material, as only during the movement of the waste material over the sieve the lighter materials move to the upper surface of the layer of material lying on the sieve. A further disadvantage of said known structure is, that a fan hasbeen mounted directly between the upper run and the lower run of the perforated conveyor belt. So the width of the perforated conveyor belt has to be relatively large in order to make it possible to mount a fan with an acceptable power, whilst yet will not be obtained a very effective suction force as the surface of the lower belt, wherein is acted by the faan, is at least equal to the diameter of the fan.

The purpose of the invention, therefore, is to obtain a device of the above-mentioned kind whereby the disadvantages inherent in the methods for separating lighter objects from waste material which have been customary up to now can be prevented.

According to the invention this can be achieved because the suction device is provided with a conveyor definded by an endless perforated conveyor defined by an endless perforated conveyor belt which is movable along the slot-shaped suction opening, one end of said conveyor extending beyond said suction opening and a side of the sieve.

Surprisingly it has become apparent in practice that hereby lighter objects such as e.g. the lighter wood and possibly other light materials such as plastic material or paper, upholstery-materials and the like can be sucked in an effective manner, whilst the heavy materials remain behind on the sieve, as the lighter elements appear to rise to the surface gradually during displacement across the sieve and therefore lie more or less loose on the heavy matter near the discharge end of the sieve, so that sucking is not prevented.

The invention will be more fully described hereinafter with reference to an embodiment of a device according to the invention diagrammatically illustrated in the accompanying figures.

Fig 1 is a diagrammatic side view of the device according to the invention.

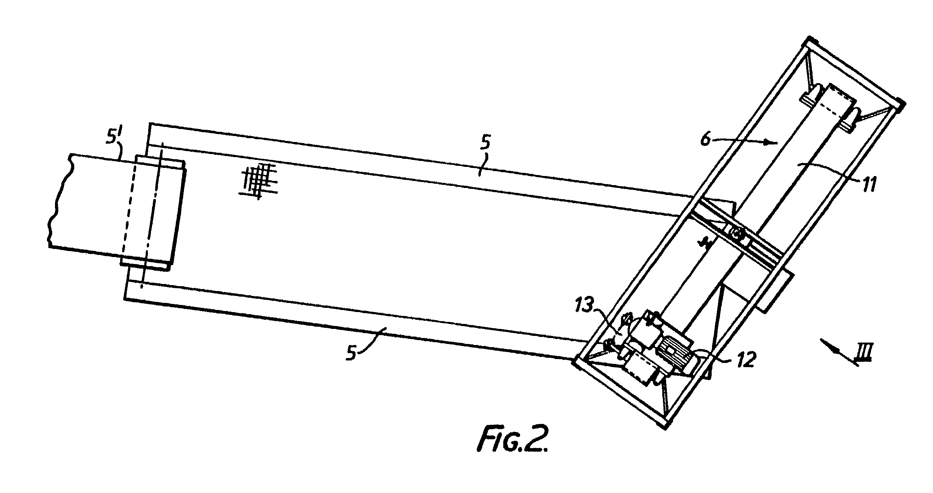

Fig 2 is a diagrammatic top view of the device illustrated in fig 1.

Fig 3 is a view of fig 2, seen according to the arrow III in fig 2.

Fig 4 is a section of fig 3, seen according to the line IV-IV in fig 3.

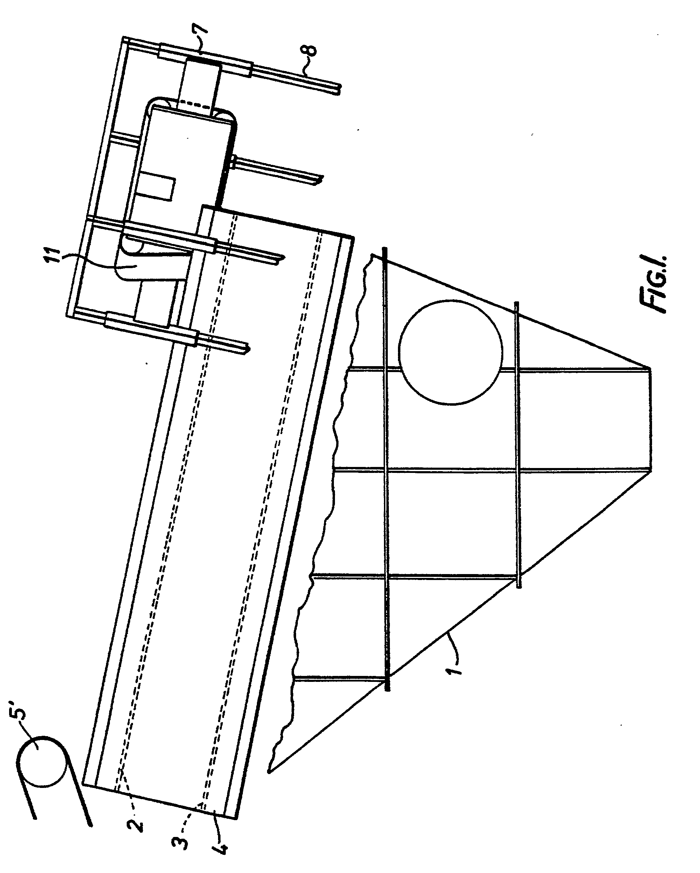

The device illustrated in fig 1 comprises a hopper 1, above which a frame 4 is arranged supporting a pair of sieves 2 and 3 located above each other. The frame 4 can be set into vibration by means of a vibrating device, not shown. Crushed rubble, which may contain pieces of wood or the like or e.g. waste material from scrapped car wrecks and consisting of a mixture of metal elements, in which there may be present scraps of upholstery materials and the like, is deposited on the upper end of the upper sieve 2 by means of a conveyor belt 5ᴇ

The finer rubble or metal parts and the grit will fall through the upper sieve 2 and land on sieve 3 located thereunder whereby the grit will fall through the sieve 3 and will be delivered to the hopper 1. The materials which cannot move through sieve 2 and sieve 3 respectively are gradually moved,while being vibrated,across the sieves from the left to the right seen in fig 1, to fall from the right-hand end of the sieve 2 and 3 respectively, whereby it is deposited on a pair of separate belts. During vibration the lighter elements, such as pieces of wood or upholstery materials appear to rise to the surface to be displace, lying on top of the heavier materials, towards the end of the sieve.

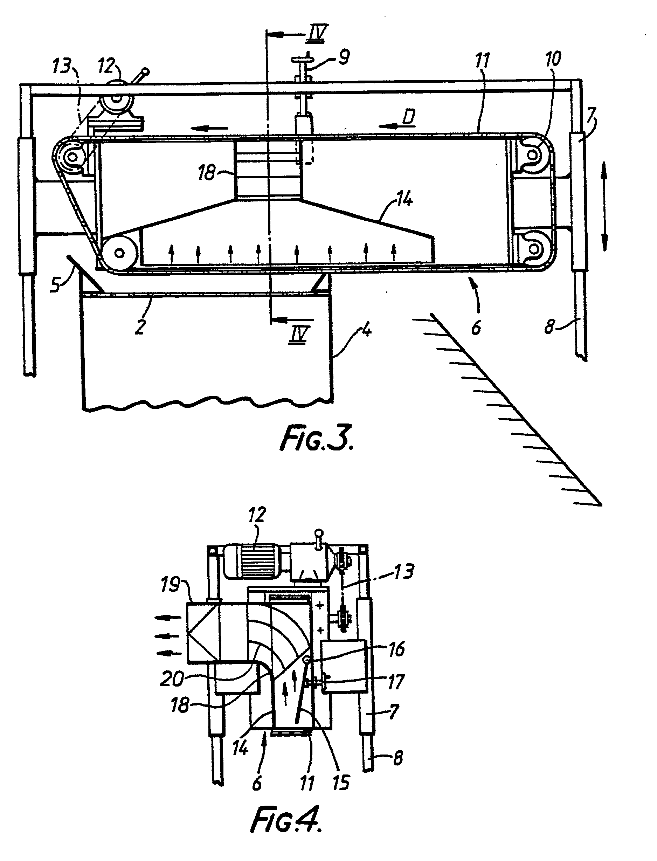

As appears in particular from fig 3 edges 5, sloping upwards, are provided at the sides of the upper sieve 2 to prevent material from falling sideways off the sieve.

Near the end of the upper sieve 2 there is arranged a suction device 6. The suction device comprises a framework 7 being movable up-and-down along a supporting frame 8 by means of a leading screw 9. Connected to the supporting frame are four roller guide rolls 10. The guide rolls serve to guide an endless perforated conveyor belt 11. For driving the conveyor belt 11 an electromotor 12 is mounted on the framework 7, which electrometer is coupled to one of the guide rolls 10 by means of a chain drive 13.

The lower part of the perforated conveyor belt 11 is thereby guided along an exhaust booth 14, open at its bottom and being connected to a fan of the like (not shown), such that a sub-atmospheric pressure can be generated in the suction chamber 14.

As is furthermore illustrated in fig 4 a baffle 15 is provided in the suction chamber which is coupled pivotally to a side wall of the suction chamber by means of a pivot pin 16 extending parallel to the lower part of the belt 11. Baffle 15 can thereby be pivoted about the pin 16 by means of a lead screw 17 and be adjusted in any desired position, so that the width of the slot of the suction chamber located above the lower part of the endless conveyor belt 11, via which air can be sucked in on generating a sub-atmospheric pressure in the suction chamber 14,can be adjusted. Preferably the width of the slot is between 5 - 15 cm.

As appears from the figures the endless conveyor belt 11 extends the transverse to the longitudinal direction of the vibrating sieve 2 and that at an angle deviating from 90°, such that the one end of the lower part of the conveyor belt is located above the upper vibrating sieve 2 near an upright wall 5 and the conveyor belt further extends past the end of the other upright side wall 5 to some distance outside the frame 14 supporting the vibrating sieve.

By generating a suitable sub-atmospheric pressure in the suction chamber 14 and setting a proper slot width light waste materials, such as pieces of wood, paper, upholstery-materials and plastic materials moving under the conveyor belt 11 will now be sucked upwardly, whilst the heavier crushed matter will remain behind on the vibrating sieve. The waste sucked against the perforated conveyor belt, such as pieces of wood, will be taken along by the conveyor belt 11 running into the direction of arrow D and thus be displaced transverse to the longitudinal direction of the vibrating sieve to a point located beside the vibrating sieve, seen in the longitudinal direction of the vibrating sieve, past the end of the slot where there is no longer a suction on the materials in question, so that they will fall off the perforated conveyor belt 11.

Because the conveyor belt 11 is vertically adjustable whilst also the width of the slot of the suction chamber 14 can be adjusted by means of the baffle 15 an optimum adjustment of the exhaust device for optimally separating wood and the like waste from the heavy waste material can be realised.

In practice it has become apparent that also larger pieces of wood such as e.g. pieces of wood with a diameter of 80 mm and a length of 800 mm can still be effectively removed when the device according to the invention is applied.

From the above it will be apparent that when a simple construction of the exhaust device is used wood and the like waste can be removed from the rubble in an effective manner.

As is furthermore illustrated in figs 4 and 5 a bend 18 joins the exhaust booth in which bend the exhausted air flow is deviated at an angle of about 90° to stream away into an exhaust duct 19.

In the bend 18 there are provided some guide blades 20 whose curvature is adapted to the course of the bend. It will be apparent that under the influence of the centrifugal force any small waste particles present in the air flow will be swung against the guide blades 20 or the inside wall of the bend 18 respectively. By providing the surfaces of these parts 20 and 18 with a suitable roughness said waste particles will tend to stick to said surfaces.

By constructing the bend with guide blades, operating as a dust collecting device, as an easily exchangeable part said part 18,20 can be exchanged at regular intervals, e.g. once a day, for a corresponding clean part, and can be re-used after cleaning.

## Claims

1. Device for separating lighter objects from waste material provided with a vibrating sieve by means of which the waste material can be displaced into the longitudinal direction of the sieve whereby near one end of the sieve a supply mechanism for the supply of the material is arranged and a suction device is provided above the vibrating sieve, characterised in that the suction device is located near the end of the vibrating sieve facing away from the supply mechanism.

2. Device according to claim 1, characterised in that the suction device is provided with a slot-shaped exhaust opening extending transverse to the longitudinal direction of the vibrating sleeve.

3. Device according to claim 2, characterised in that the suction device is provided with an endless perforated conveyor belt, which is movable along the slot-shaped suction opening.

4. Device according to claims 2 or 3, characterised in that the width of the slot-shaped suction opening is adjustable.

5. Device according to any of the preceding claims, characterised in that the distance between the vibrating sieve and the suction device is adjustable.

6. Device according to any of the preceding claims, characterised in that the conveyor belt extends past one side of the vibrating sieve.

7. Device according to claim 6, characterised in that the direction of displacement of the conveyor belt of the suction device makes an acute angle with the direction of the displacement of the vibrating sieve such that, seen in the direction in which the material moves across the vibrating sieve during operation, the part of the suction device located above the vibrating sieve is located nearer by than the part of the conveyor belt of the suciton device projecting beyond the vibrating sieve.

**Patentansprüche**

1. Vorrichtung zum Trennen leichter Teile von Abfallmaterial mit einem Vibrationssieb, welches das Abfallmaterial in Längsrichtung des Siebes fördert, wobei nahe dem einen Siebende ein Fördermechanismus zum Zuführen des Materials und eine Saugvorrichtung nahe dem Fördermechanismus abgewandten Ende des Vibrationssiebes angeordnet sind, und wobei die Saugvorrichtung mit einer schlitzförmigen Saugöffnung versehen ist, die sich quer zur Längsrichtung des Vibrationssiebes erstreckt und an die eine Saugdüse mittels einer Leitung angeschlossen ist, dadurch gekennzeichnet, daß die Saugvorrichtung mit einem Förderer versehen ist, der aus einem perforierten Endlos-Förderband besteht, welches entlang der schlitzförmigen Saugöffnung bewegbar ist und sich mit einem Ende über die Saugöffnung und eine Seite des Siebes hinaus erstreckt.

2. Vorrichtung nach Anspruch 1, dadurch gekennzeichnet , daß die Breite der schlitzförmigen Saugöffnung verstellbar ist.

3. Vorrichtung nach einem der Ansprüche 1 oder 2, dadurch gekennzeichnet, daß der Abstand zwischen dem Vibrationssieb und der Saugvorrichtung verstellbar ist.

4. Vorrichtung nach einem der Ansprüche 1 bis 3, dadurch gekennzeichnet, daß die Richtung der Verlagerung des Förderbandes der Saugvorrichtung einen spitzen Winkel mit der Richtung der Verlagerung des Vibrationssiebes derart einschließt, daß in der Richtung gesehen, in der sich das Material über das Vibrationssieb während seines Betriebs bewegt, der Teil der Saugvorrichtung, welcher sich oberhalb des Vibrationssiebes befindet näher liegt als der Teil des Förderbandes der Saugvorrichtung, der sich über das Vibrationssieb hinaus erstreckt.

5. Vorrichtung nach einem der vorhergehenden Ansprüche, dadurch gekennzeichnet, daß die Saugvorrichtung derart gestaltet ist, daß die Saugvorrichtung teilweise oberhalb des Vibrationssiebes angeordnet ist und ferner sich über das Ende des Vibrationssiebes hinaus erstreckt und über das Vibrationssieb vorsteht.

6. Vorrichtung nach einem der vorhergehenden Ansprüche, dadurch gekennzeichnet, daß die schlitzförmige Saugöffnung durch die Bodenseite einer Saugkammer gebildet ist, an welche ein Krümmer lösbar anschließbar ist, welcher eine Staubsammelvorrichtung umfaßt.

7. Vorrichtung nach Anspruch 6, dadurch gekennzeichnet, daß Leitschaufeln mit gerauhter Oberfläche im Krümmer angeordnet sind.

**Revendications**

1. Dispositif pour séparer des objets légers de déchets pourvu d'un crible vibrant au moyen duquel les déchets peuvent être déplacés dans la direction longitudinale du crible, un mécanisme d'alimentation étant disposé près d'une extrémité du crible pour l'alimentation en déchets et un dispositif aspirant étant prévu près de l'extrémité située à l'opposée du mécanisme d'alimentation, le dit dispositif aspirant étant pourvu d'une ouverture d'évacuation en forme de fente s'étendant transversalement à la direction longitudinale du crible vibrant et étant relié à une turbine d'aspiration à l'aide d'une conduite, caractérisé en ce que ce dispositif aspirant est pourvu d'un transporteur défini par une bande transporteuse sans fin perforée qui est mobile le long de l'ouverture d'aspiration en forme de fente, une extrémité du dit transporteur s'étendant au delà de la dite ouverture d'aspiration et à coté du crible.

2. Dispositif selon la revendication 1, caractérisé en ce que la largeur de l'ouverture d'aspiration en forme de fente est réglable.

3. Dispositif selon la revendication 1 ou 2, caractérisé en ce que la distance entre le crible vibrant et le dispositif aspirant est réglable.

4. Dispositif selon l'une quelconque des revendications 1 à 3, caractérisé en ce que la direction du déplacement de la bande transporteuse du dispositif aspirant fait un angle aigu avec la direction du déplacement du crible vibrant de telle sorte que, vu dans la direction dans laquelle la matière se déplace sur le crible vibrant en fonctionnement, la partie du dispositif aspirant située au dessus du crible vibrant se trouve plus près que la partie de la bande transporteuse du dispositif aspirant se projetant au delà du crible vibrant.

5. Dispositif selon l'une quelconque des revendications précédentes, caractérisé en ce que le dispositif aspirant est prévu de manière à être situé partiellement au dessus du crible vibrant, à dépasser de l'extrémité du crible vibrant et à se projeter au delà de ce crible vibrant.

6. Dispositif selon l'une quelconque des revendications précédentes, caractérisé en ce que l'ouverture d'aspiration en forme de fente est constituée par le côté inférieur d'une chambre d'aspiration a laquelle est relié de manière démontable un coude comprenant un dispositif de collecte de poussière.

7. Dispositif selon la revendication 6, caractérisé en ce que des lames de guidage ayant une surface rugueuse sont prévues dans le coude.

Fig.I.

EP 0 271 608 B1

Fig.2.

EP 0 271 608 B1

Fig.3.

Fig.4.